# EUROPÄISCHE PATENTSCHRIFT

(11) **EP 2 848 360 B1**
(45) Veröffentlichungstag und Bekanntmachung des Hinweises auf die Patenterteilung: **19.10.2016**
(21) Anmeldenummer: 13184339.3
(22) Anmeldetag: 13.09.2013
(51) Int. Cl.: B23Q 11/00, B23Q 11/08

(54) **NUMERISCH GESTEUERTE WERKZEUGMASCHINE MIT EINEM FORMELEMENT ZUM ÜBERDECKEN DES WERKZEUGMASCHINENBETTS.**
NUMERICALLY CONTROLLED MACHINE TOOL WITH A FORM ELEMENT FOR COVERING THE BED OF THE MACHINE TOOL.
MACHINE-OUTIL À COMMANDE NUMÉRIQUE AVEC UN ÉLÉMENT DE FORME POUR COUVRIR LA BASE DE LA MACHINE-OUTIL.

(43) Veröffentlichungstag der Anmeldung: 18.03.2015
(73) Patentinhaber: DMG MORI AKTIENGESELLSCHAFT, 33689 Bielefeld (DE); DMG MORI CO., LTD., Yamatokoriyama-shi Nara 639-1160 (JP)
(72) Erfinder: Köchl, Roland, 6682 Vils (AT); Zimmermann, Anton, 6673 Grän (AT)
(74) Vertreter: MERH-IP Matias Erny Reichl Hoffmann Patentanwälte PartG mbB

(56) Entgegenhaltungen:
- EP-A1- 1 719 573
- EP-A2- 1 413 393
- WO-A1-2013/094367
- JP-A- 2006 175 527

## Beschreibung

Die vorliegende Erfindung betrifft eine numerisch gesteuerte Werkzeugmaschine mit einem Formelement, das insbesondere ein Maschinenbett der Werkzeugmaschine vor Temperaturschwankungen der Umgebungstemperatur der Werkzeugmaschine schützt.

Im Stand der Technik sind numerisch gesteuerte Werkzeugmaschinen bekannt, die auf einem Maschinenbett lagern. Die Werkzeugmaschinen sind nach außen durch eine Maschinenkabine abgeschlossen, damit das Bedienpersonal vor umherfliegendem Spanmaterial, das während der Bearbeitung von dem Werkstück weggeschleudert werden kann, und Kühlflüssigkeit, die versprüht wird, geschützt wird. Gleichzeitig schützt die Kabine auch vor äußeren Einflüssen, wie zum Beispiel einem Luftzug, der die Bearbeitungsgenauigkeit verfälschen könnte. Nachteilig ist bei den herkömmlichen Werkzeugmaschinen jedoch weiterhin, dass kurzzeitige Temperaturschwankungen im Bereich der Werkzeugmaschine und zu thermischen Verformungen, insbesondere des Maschinenbetts der Werkzeugmaschine, führen können. Diese häufig relativ kleinen Verformungen können die Arbeitsgenauigkeit der Werkzeugmaschine jedoch entscheidend verringern.

JP 2006 175527 A beschreibt eine Abdeckung einer Werkzeugmaschine, um die von dieser erzeugten Lärmemissionen zu reduzieren.

EP 1413 393 A2 beschreibt einen Abdeckrahmen, an dem innere und äußere Deckplatten befestigt sind, der aufrecht auf einem Boden, wo der Hauptkörper einer Werkzeugmaschine installiert ist, platziert ist.

WO 2013/094 367 A1 beschreibt eine Werkzeugmaschine mit einem Maschinenbett sowie einer Abdeckeinheit der Werkzeugmaschine.

EP 1 719 573 beschreibt eine Werkzeugmaschine mit einem monolithisch aus Polymerbeton gegossenen Maschinengestell.

Es ist eine Aufgabe der vorliegenden Erfindung eine numerisch gesteuerte Werkzeugmaschine zu schaffen, die gegenüber Temperaturschwankungen der Umgebung der Werkzeugmaschine unempfindlicher ist und damit eine weiter verbesserte Arbeitsgenauigkeit bietet.

Die Aufgabe wird von der Erfindung gemäß dem unabhängigen Patentanspruch gelöst. Weitere bevorzugte Weiterentwicklungen der Erfindung sind in den abhängigen Patentansprüchen beschrieben.

Gemäß einem ersten Aspekt der Erfindung wird eine numerisch gesteuerte Werkzeugmaschine voreschlagen, mit einem auf einer ebenen Bodenfläche (z.B. Werkstattboden) aufstellbaren Maschinenbett, einer von (bzw. auf) dem Maschinenbett gestützten Kabine, und einem Formelement, das einen unteren Abschnitt des Maschinenbett zumindest zwischen der ebenen Bodenfläche und einer Kabinenwand der Kabine überdeckt, wobei das Formelement derart an der Werkzeugmaschine befestigt ist, dass ein Hohlraum zwischen dem Maschinenbett und dem Formelement ausgebildet ist.

Die Erfindung ermöglicht, dass ein wärmeisolierender Hohlraum mittels des Formelementes insbesondere um den unteren Teil des Maschinenbetts herum bildbar ist, der nicht von der Kabine selbst geschützt wird und in im Stand der Technik bekannten Werkzeugmaschinen nach außen frei liegt. Die wärmeisolierende Eigenschaft des Hohlraums ermöglicht, dass insbesondere kurzeitig auftretende Temperaturschwankungen in einer Maschinenhalle, in der die erfindungsgemäße Werkzeugmaschine aufgestellt ist, zu signifikant weniger bzw. gar keiner Verformung des Maschinenbetts führt. Solche Temperaturschwankungen können beispielsweise im Winter auftreten, wenn Tore der Maschinenhalle geöffnet werden müssen und es äußerst schnell zu bodennahen Temperaturabfällen kommen kann. Aufgrund des Verhinderns von temperaturschwankungsinduzierten Verformungen des Maschinenbettes wird folglich auch die Genauigkeit der Werkstückbearbeitung weiter erhöht bzw. zumindest besser sichergestellt.

Vorzugsweise erstreckt sich das Formelement im Wesentlichen von der ebenen Bodenfläche zu einem oberen Abschnitt des Maschinenbetts, insbesondere bevorzugt derart, dass ein oberer Abschnitt des Formelements zwischen dem Maschinenbett und einem unteren Abschnitt der Kabine angeordnet ist. Besonders bevorzugt befindet sich der untere Abschnitt der Kabine mit dem Formelement in Kontakt. Durch einen derartigen direkten Übergang von Formelement und Kabine ist das Maschinenbett vor kurzfristigen äußeren Temperaturschwankungen geschützt bzw. zumindest für kurzfristig auftretende Temperaturschwankungen thermisch isoliert.

Vorzugsweise überdeckt das Formelement den unteren Abschnitt des Maschinenbetts zumindest entlang einer Vorderseite des Maschinenbetts, entlang zwei oder mehr Seiten des Maschinenbetts, oder gar den unteren Abschnitt des Maschinenbetts den vollen Umfang des Maschinenbetts umschließend.

Vorzugsweise ist das Formelement aus Metall und/oder einem Kunststoff geformt.

Vorzugsweise umfasst das Formelement ein oder mehrere stranggepresste Formbleche, die vorzugsweise an eine äußere Form des Maschinenbetts angepasst sind.

Vorzugsweise weist das Formelement eine Oberflächenbeschichtung aus einem Beschichtungsmaterial auf, das eine Wärmeleitfähigkeit aufweist, die unter der Wärmeleitfähigkeit des Materials des Formelements liegt. Somit kann die thermisch isolierende Wirkung des Hohlraums noch weiter verbessert werden. Vorzugsweise ist die Oberflächenbeschichtung hierbei auf einer dem Hohlraum zugewandten Oberfläche des Formelements vorgesehen.

Vorzugsweise ist das Formelement mittels einer Vielzahl von Befestigungselementen, insbesondere mittels Schrauben oder Bolzen, an dem Maschinenbett befestigt, wobei die Befestigungselemente sich bevorzugt von dem Formelement durch den Hohlraum zu dem Maschinenbett erstrecken. Vorzugsweise sind die Befestigungselemente hierbei aus einem Material gebildet, das eine Wärmeleitfähigkeit aufweist, die unter der Wärmeleitfähigkeit des Materials des Formelements liegt. Somit kann das Maschinenbett noch weiter verbessert vor äußeren Temperaturschwankungen bzw. von Temperaturschwankungen der Temperatur des Formelements geschützt werden.

Vorzugsweise weist das Formelement vertiefte Abschnitte auf, so dass der Abstand des Formelements zu dem Maschinenbett variiert, wobei die vertieften Abschnitte an einer unteren Kante des Formelements ausgebildet sind. Dies ermöglich es einem Benutzer der Maschine an Positionen der vertieften Abschnitte, näher an die Maschine heranzutreten, da Platz für die Vorderfüße des Bearbeiters geschaffen werden kann.

Erfindungsgemäß ist eine Gummilippe entlang einer unteren Kante des Formelements angebracht, die dazu geeignet ist, einen Spalt zwischen der unteren Kante des Formelements und der ebenen Bodenfläche abzudichten. Dies hat den Vorteil, dass selbst bei leichten Unebenheiten des Werkstattbodens der Hohlraum von der Luft bzw. Luftzügen im Bodenbereich der Werkstatthalle geschützt ist und der thermische Schutz bzw. die thermische Isolierung des Maschinenbetts nach außen weiter verbessert werden kann.

Vorzugsweise weist das Maschinenbett sich horizontal nach außen erstreckende Maschinenbettfüße zur Aufstellung auf der ebenen Bodenfläche auf, wobei das Formelement Aussparungen aufweist, durch die sich die Maschinenbettfüße erstrecken.

Weitere vorteilhafte Aspekte der Erfindung sind im Folgenden beschrieben. Gemäß einem Ausführungsbeispiel kann eine numerisch gesteuerte Werkzeugmaschine ein Maschinenbett und eine Kabine mit einer Kabinenwand aufweisen. Die Kabinenwand kann das Maschinenbett zumindest teilweise umschließen. Weiter kann die Werkzeugmaschine zumindest ein Formelement aufweisen, das eine im Wesentlichen plattenförmige Grundform haben kann. Das Formelement kann mit der Werkzeugmaschine derart befestigt sein, dass zwischen dem Formelement und der Kabinenwand und/oder dem Maschinenbett ein Hohlraum gebildet werden kann.

Dies ermöglicht vorteilhaft, dass ein wärmeisolierender Hohlraum mittels des Formelementes insbesondere um das Maschinenbett herum bildbar ist. Die wärmeisolierende Eigenschaft des Hohlraums ermöglicht, dass insbesondere kurzeitig auftretende Temperaturschwankungen in einer Maschinenhalle, in der die erfindungsgemäße Werkzeugmaschine aufgestellt ist, zu weniger bzw. gar keiner Verformung des Maschinenbetts führt. Solche Temperaturschwankungen können beispielsweise im Winter auftreten, wenn Tore der Maschinenhalle geöffnet werden müssen. Aufgrund des Verhinderns von temperaturschwankungsinduzierten Verformungen des Maschinenbettes wird folglich auch die Genauigkeit der Werkstückbearbeitung weiter erhöht bzw. zumindest besser sichergestellt.

Weiter kann das Formelement an einem unteren Abschnitt an dem Maschinenbett bis zu einer vorbestimmten Höhe des Maschinenbetts angeordnet sein. Der Hohlraum kann zwischen dem Maschinenbett und dem Formelement angeordnet sein.

Ein unterer Abschnitt des Maschinenbetts bezeichnet bevorzugt den Bereich des Maschinenbetts, der in Richtung eines Werkstattbodens, auf dem die Maschine aufsteht, angeordnet ist bzw. der Bereich mit dem die Maschine aufsteht. Eine bevorzugte vorbestimmte Höhe liegt im Bereich von 1 cm bis 50 cm. Besonders bevorzugt 10 cm bis 30 cm. Größere Werte als 50 cm oder kleinere als 1 cm sind auch möglich. Die vorbestimmte Höhe wird bevorzugt ausgehend vom Werkstattboden bzw. der Ebene, auf der das Maschinenbett oder die Werkzeugmaschine selbst aufsteht, gemessen.

Alternativ oder zusätzlich kann die Kabine auch den Bodenabschnitt des Maschinenbetts vollständig umschließen. Dann kann das Formelement an einer Außen- und/oder Innenseite der Kabinenwand befestigt sein. Oder das Formelement ist dann am Maschinenbett innerhalb der Kabinenwand befestigt, d.h. zwischen Kabinenwand und Maschinenbett.

Insbesondere wenn der Hohlraum zwischen dem Maschinebett und dem Formelement gebildet ist, kann besonders effektiv verhindert werden, dass Temperaturschwankungen direkt zu Verformungen des Maschinenbetts führen. Dies ist insbesondere im Hinblick auf kühle Luftstrommassen im Bereich des Bodenabschnittes sinnvoll. Temperaturschwankungen, die z.B. aufgrund eines geöffneten Maschinenhallentors auftreten, werden in der Regel von kalten, bodennah fließenden Luftmassen erzeugt, so dass die Umschließung eines Teils oder des gesamten Bodenabschnitts den bevorzugten Effekt hat, dass das Maschinenbett in diesem Bereich mittels des Formelementes bzw. des Hohlraums besonders gut wärmeisoliert ist.

Die Kabine kann oberhalb des Formelementes angeordnet sein. Das Formelement kann zwischen einem Werkstattboden und der Kabine angeordnet sein. In diesem Fall wird das Maschinenbett in einem Bodenabschnitt von dem Formelement bzw. dem Hohlraum vor Temperaturschwankungen geschützt. Die Kabinenwand muss nicht in aufwendiger Bauweise bis zum Werkstattboden ausgeführt sein. Das Formelement kann nur eine Seitenwand des Maschinenbetts teilweise oder vollständig bedecken oder mehrere Seitenwände. Selbstverständlich kann das Formelement das Maschinenbett auch vollständig umschließen.

Ferner kann ein Teilabschnitt des Formelementes zwischen der Kabine und dem Maschinenbett angeordnet sein. Dies bedeutet, dass im unteren Abschnitt des Maschinenbettes nur das Formelement vorgesehen ist und in einem oberhalb dieses unteren Abschnittes angeordneten Abschnittes des Maschinenbettes bzw. der Werkzeugmaschine außenseitig eine Kabinenwand angeordnet ist. Zwischen Kabinenwand und Maschinenbett ist in diesem oberen Abschnitt das Formelement angeordnet. Dies hat den Vorteil, dass eine Lücke bzw. Öffnung zwischen dem Formelement und der Kabinenwand an deren Übergang sicher vermieden werden kann.

Ferner kann das Formelement zumindest an einer Seitenwand des Maschinenbetts angeordnet sein. Das Formelement kann zusätzlich oder alternativ zumindest einen Teilabschnitt einer Rückwand und/oder zumindest einen Teilabschnitt zumindest einer Seitenwand der Kabine bedecken. Das Formelement kann das Maschinenbett vollständig umschließen.

Grundsätzlich gilt, dass je mehr Hohlraumvolumen gebildet ist bzw. je mehr Fläche des Maschinenbettes mittels des Formelementes bedeckt ist, eine verbesserte Wärmeisolierung des Kabineninnenraums gegenüber der Kabinenumgebung erreichbar ist. Somit kann noch besser verhindert werden, dass Temperaturschwankungen der Kabinenumgebung zu Temperaturschwankungen innerhalb des Kabineninnenraums führen. Dies ist insbesondere im Hinblick von kurzfristig auftretenden Schwankungen, die zu einer kurzfristigen Verformung des Maschinenbetts führten, erwünscht.

Weiter kann das Formelement derart an eine Form der Kabinenwand angepasst sein, dass das Formelement und die Kabinenwand und/oder das Maschinenbett einen nach außen abgeschlossenen Hohlraum bilden.

Ein nach außen abgeschlossener Hohlraum bedeutet, dass im Wesentlichen kein oder nur ein geringer Luftmassenaustausch zwischen dem Hohlraum und der Außenumgebung des Hohlraums erfolgt. Somit wird beispielsweise die Ausbildung eines konstanten Luftpolsters innerhalb des Hohlraums ermöglicht, dass einen Wärmefluss durch den Hohlraum effektiv reduziert.

Ferner kann der Hohlraum mit Luft gefüllt sein oder luftentleert sein. Ferner kann ein Material innerhalb des Hohlraums angeordnet sein, das eine vorbestimmte Wärmeleitfähigkeit nicht überschreitet. Die Luftevakuierung kann mittels einer kleinen Pumpe erfolgen.

Wie bereits erläutert führt die Luftfüllung des insbesondere nach außen abgeschlossenen Hohlraums zu einem kleinen Wärmedurchgangskoeffizienten und somit einer guten Wärmeisolierung. Eine noch weitere Verbesserung im Hinblick auf die Wärmeisolierung kann mittels eines luftentleerten Hohlraums erreicht werden. Luftentleert bedeutet dabei, dass der Hohlraum ein Vakuum aufweist. Bereits ein Grobvakuum führt dabei zu einer bevorzugten Reduktion des Wärmedurchgangskoeffizienten.

Ferner kann das Formelement aus einem metallischen und/oder einem Kunststoffmaterial bestehen oder diese Materialien zumindest aufweisen.

Im Hinblick auf eine gute Fertigbarkeit des Formelementes, insbesondere mit wenig komplexen Arbeitsvorgängen wie Metallbiegen, etc., wird ein metallischer Werkstoff bevorzugt. Kunststoff ist ebenfalls im Hinblick auf die gewünschte Formgebung verarbeitbar und hat den weiteren Vorteil, dass die Wärmeleitfähigkeit von Kunststoff regelmäßig vergleichsweise gering ist, so dass die wärmeisolierenden Eigenschaften des Formelementes weiter unterstützt werden können.

Weiter kann das Formelement ein stranggepresstes Formblech sein, das mittels Biegen an eine äußere Form der Kabine der Werkzeugmaschine angepasst werden kann. Zusätzlich oder alternativ kann das Formelement aus einer Vielzahl von Einzelelementen gebildet sein.

Diese Flexibilität im Hinblick auf die Fertigungstechniken erlaubt es insbesondere, dass das Formelement an eine im Wesentlichen beliebige äußere Form einer Werkzeugmaschine bzw. der Kabinenwand bzw. des Maschinenbetts ohne zusätzlichen, komplexen Fertigungsaufwand anpassbar ist.

Weiter kann das Formelement bevorzugt auf einer Oberfläche, die innerhalb des Hohlraums angeordnet sein kann, eine Beschichtung aufweisen. Die Beschichtung kann ein Material mit einer Wärmeleitfähigkeit aufweisen, die unterhalb einer maximalen vorbestimmten Wärmeleitfähigkeit sein kann.

Somit wird eine zusätzliche thermische Barriere vorgesehen, die den Wärmefluss durch das Formelement und den dadurch gebildeten Hohlraum weiter verringert. Eine maximale vorbestimmte Wärmeleitfähigkeit in W/m K ist dabei bevorzugt kleiner als 3. Weiter bevorzugt wird eine maximale vorbestimmte Wärmeleitfähigkeit in W/m K von kleiner 1. Beispielsweise werden Kunststoffe als Material für die Beschichtung bevorzugt.

Ferner kann das Formelement mit der Werkzeugmaschine lösbar und/oder fest mittels einer form- und/oder kraftschlüssigen Verbindung befestigbar ist. Bevorzugt kann das Formelement mit dem Maschinenbett verbunden sein. Bevorzugt wird zur Befestigung des Formelementes zumindest ein Bolzen verwendet.

Dies ermöglicht das wenig komplexe und schnelle Befestigen des Formelementes, beispielsweise mittels einer Schraubverbindung oder einer Rastclipverbindung, an der Werkzeugmaschine und gleichzeitig ein schnelles Lösen, z.B. im Falle von notwendigen Wartungsarbeiten an der Werkzeugmaschine. Ein Bolzen wiederum ermöglicht eine dauerhaft sichere und wenig aufwendige Fixierung.

Ferner kann das Formelement vertiefte Abschnitte aufweisen, so dass im am Maschinenbett montierten Zustand der Abstand des Formelementes zu dem Maschinenbett entlang einer Längsrichtung des Formelementes variieren kann.

Dies bedeutet, dass, wenn das Formelement beispielsweise eine Vorderseite des Maschinenbetts bedeckt, entlang der Vorderseite Abschnitte vorhanden sind, in denen das Formelement enger zu dem Maschinenbett angeordnet ist, als in anderen Abschnitten. Dies ist insbesondere im Arbeitsbereich der Werkzeugmaschine vorteilhaft, da ein Bediener der Werkzeugmaschine in diesem Arbeitsbereich möglichst nah an die Maschine herantreten können muss. Wenn in diesem Bereich das Formelement enger an dem Maschinenbett anliegt, so wird der Bediener durch das Formelement nicht behindert.

Weiter kann ein zu einem Werkstattboden ausrichtbarer Abschnitt des Formelementes eine Gummilippe aufweisen. Dies hat den Vorteil, dass auch Unebenheiten des Werkstattbodens ausgeglichen werden können und ein optimales Anliegen des Formelementes am Werkstattboden gewährleistet ist. Somit werden Lücken oder Öffnungen zwischen Werkstattboden und Formelement sicher verhindert, was eine optimale Isolierwirkung des Formelementes bzw. des Hohlraums ermöglicht.

Ferner kann das Formelement Aussparungen aufweisen, beispielsweise um darin Maschinenbettfüße aufzunehmen. Somit werden sowohl ein sicheres Aufstellen der Werkzeugmaschine auf Füßen sowie eine optimale Isolationswirkung durch das Formelement sichergestellt.

Zusammenfassend ermöglicht die Erfindung somit, dass eine Werkzeugmaschine insbesondere im Hinblick auf die erzielbaren Fertigungsgenauigkeiten weiter verbessert wird, indem eine Sensitivität für Temperaturschwankungen und dadurch induzierte Verformungen, insbesondere des Maschinenbettes, reduziert wird.

Die Erfindung wird im Folgenden exemplarisch mit Bezug auf die beigefügten, schematischen Zeichnungen beschrieben. Es zeigen
Fig. 1 zwei 3D-Ansichten des erfindungsgemäßes Formelementes,
Fig. 2 eine Seitenansicht des Formelementes, das an einem Maschinenbett einer Werkzeugmaschine angeordnet ist,
Fig. 3 eine Draufsicht des Formelementes, das an einem Maschinenbett einer Werkzeugmaschine befestigt ist, und
Fig. 4 eine weitere Seitenansicht des erfindungsgemäßen Formelementes, das an einem Maschinenbett angeordnet ist, sowie einen vergrößerten Teilausschnitt.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

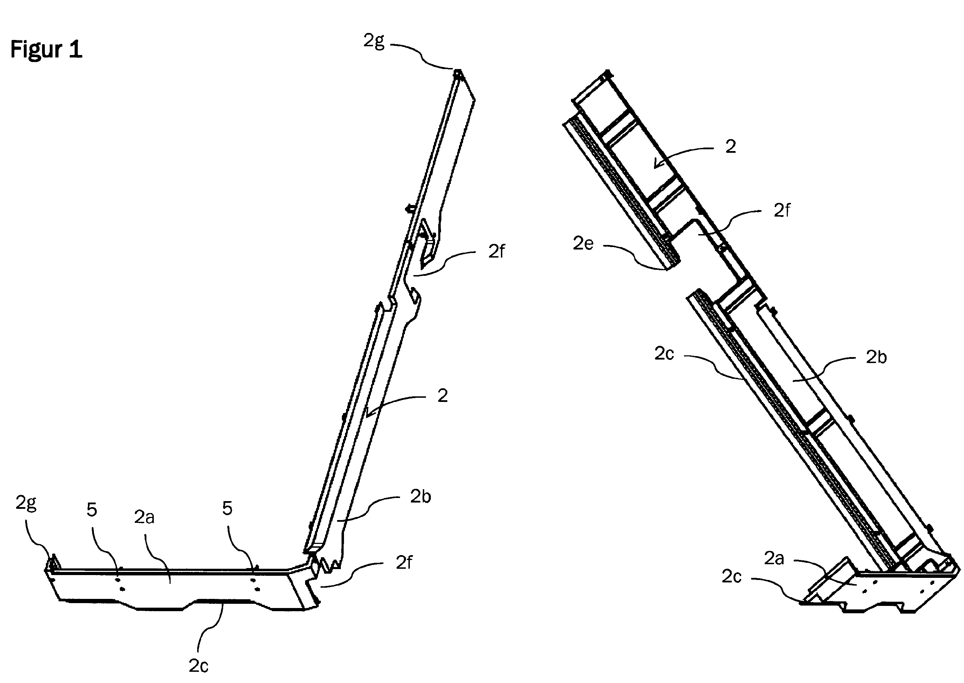

Fig. 1 zeigt zwei perspektivische Ansichten des erfindungsgemäßen Formelementes 2, das als ein Thermoschild zur besseren thermischen Isolation einer numerisch gesteuerten Werkzeugmaschine verwendet wird. Das dargestellte Formelement 2 umfasst zwei plattenförmige Elemente 2a und 2b, die L-förmig zueinander angeordnet sind. Die beiden Elemente 2a, 2b sind an dem Eckpunkt der L-Form fest miteinander verbunden. Alternativ kann das Formelement 2 auch einteilig ausgeführt sein. Die L-Form ermöglicht, dass längere Element 2b einer Vorderseite eines Maschinenbettes 1 zuzuordnen. Das kürzere Element 2a kann vor einer Seitenwand des Maschinenbettes 1 angeordnet werden.

Wie sich den beiden Darstellungen in Fig. 1 entnehmen lässt, weist das Formelement 2 zwei größere Aussparungen 2f auf, die derart angeordnet sind, dass die Aussparungen 2f Maschinenbettfüße 1a aufnehmen können. Weiterhin zeigen die beiden Darstellungen des Formelementes 2, dass das kürzere Element 2a des Formelementes 2 vertiefte Abschnitte 2c aufweist, die in einem unteren Abschnitt des Formelementes 2, der in Richtung eines Werkstattbodens im montierten Zustand des Formelementes 2 angeordnet ist, vorgesehen sind. Wenn das Formelement 2 an einem Maschinenbett 1 bzw. der Seitenwand 4 eines Maschinenbettes 1 montiert ist, verkürzen die vertieften Abschnitte 2c den Abstand zwischen der Seitenwand 4 und einer Innenwandung des Formelementes 2. Dies ist insbesondere im Hinblick darauf vorteilhaft, dass die vertieften Abschnitte 2c verhindern, dass das Formelement 2 einem Bediener beim Bedienen der Werkzeugmaschine nicht hinderlich ist. Konkret können in diesen vertieften Abschnitten 2c die Füße eines Bedieners aufgenommen werden, so dass der Bediener sehr nah an die Werkzeugmaschine herantreten kann.

Es sind ferner Aufnahmebereiche an dem Einzelelement 2a dargestellt, die einen Bolzen 5a zur Bildung einer form- und/oder kraftschlüssigen Verbindung 5 mit dem Maschinenbett 1 aufnehmen. Weiterhin zeigt die Fig. 1, dass Endbereiche 2g des Formelementes 2 eine Form aufweisen, die derart angepasst ist, dass das Formelement möglichst formgenau an dem Maschinenbett 1 anbringbar ist. So weisen beide Endbereiche 2g abgewinkelte Bereiche auf, die z.B. erlauben, dass das Formelement 2 möglichst genau mit einer Kabinenwand der Werkzeugmaschine ineinandergreift.

Der rechten Darstellung der Fig. 1 lässt sich des Weiteren entnehmen, dass im Bereich einer Innenwandung des Formelementes 2 Versteifungen angeordnet sind, die eine bessere strukturelle Festigkeit des Formelementes 2 gewährleisten.

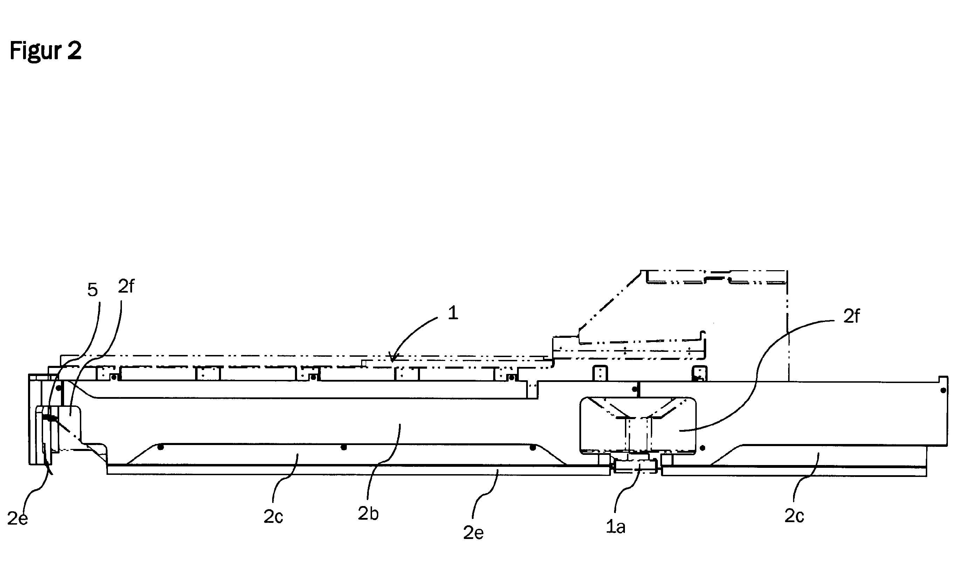

Ferner zeigt Fig. 2 das Formelement 2 in einem an dem Maschinenbett 1 montierten Zustand. Die Seitenansicht aus Fig. 2 zeigt den in Fig. 1 mit 2b bezeichneten Teil des Formelementes 2. Das gezeigte Formelement 2 bedeckt im montierten Zustand zumindest den unteren Abschnitt des Maschinenbettes 1 vollständig, wobei der Fuß 1a des Maschinenbettes 1 passgenau in die Aussparung 2f eingefügt ist. Gegebenenfalls vorhandenen Spalte zwischen dem Fuß 1a und Kanten der Aussparung 2f können mittels eines Dichtmaterials vollständig verschlossen werden.

Weiterhin ist in Fig. 2 die Anordnung der vertieften Abschnitte 2c dargestellt, die im Bereich eines unteren Abschnittes des Formelementes 2 angeordnet sind. Unterhalb davon ist eine Gummilippe 2e anordnet. Die Gummilippe 2e ermöglicht, dass das Formelement 2 möglichst passgenau mit einem Werkstattboden abschließt, auf dem die Werkzeugmaschine aufgestellt ist, so dass der Hohlraum 3 zwischen dem Formelement 2 und der Seitenwand 4 des Maschinenbettes 1 möglichst gut gegen zum Beispiel kalte Zugluft geschützt ist. Dies ermöglicht eine optimale thermische Isolierung des Maschinenbettes 1 auch im Hinblick auf kurzzeitige Temperaturschwankungen in einer Werkzeughalle, in der die Werkzeugmaschine aufgestellt ist. Die Gummilippe 2e verläuft im Wesentlichen entlang der gesamten Länge des Formelementes 2, kann aber wie in Fig. 2 dargestellt, im Bereich des Maschinenbettfußes 1a unterbrochen sein.

Weiterhin zeigt die Fig. 2 detailliert die Form der Aussparungen 2f des Formelementes 2. Eine erste Aussparung 2f, in der der Maschinenbettfuß 1a der Fig. 2 gezeigt ist, weist einen im Wesentlichen rechteckigen Bereich auf, an den sich unterhalb ein kanalförmiger Abschnitt anschließt. Im Bereich des kanalförmigen Abschnittes ist der Teil des Maschinenbettfußes 1a angeordnet, der auf dem Werkstattboden aufsteht. Eine weitere Aussparung 2f, die in einem Kantenbereich des Formelementes 2 angeordnet ist, weist eine im Wesentlichen stufenförmige Form auf.

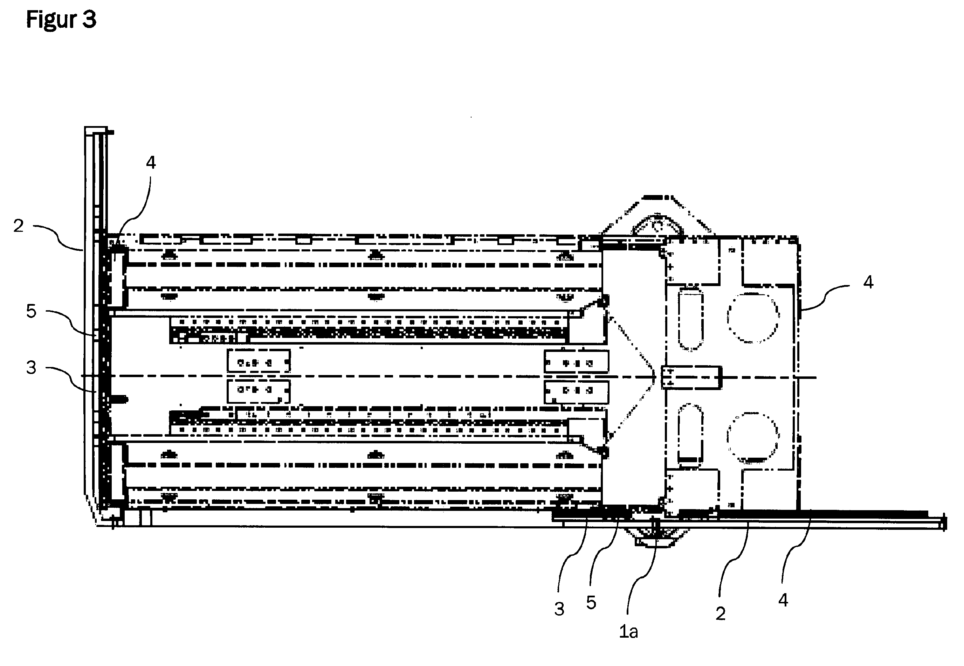

Fig. 3 zeigt eine Draufsicht des Formelementes 2, das mittels der Verbindung 5 mit dem Maschinenbett 1 fest verbunden ist. Die Verbindung 5 wird bevorzugt aus Bolzen 5a gebildet, die das Formelement 2 an zumindest einer Seitenwand 4 des Maschinenbettes 1 halten. Die Darstellung in Fig. 3 zeigt, dass zumindest zwei Seitenwände 4 des Maschinenbettes 1 aufgrund der L-Form der beiden Einzelelemente 2a, 2b des Formelementes 2 von dem Formelement 2 bedeckt werden, so dass ein Hohlraum 3 zwischen einer Innenwand des Formelementes 2 und diesen beiden Seitenwänden 4 des Maschinenbettes 1 gebildet wird. Dieser Hohlraum 3 kann luftgefüllt sein oder auch teilluftentleert/evakuiert sein.

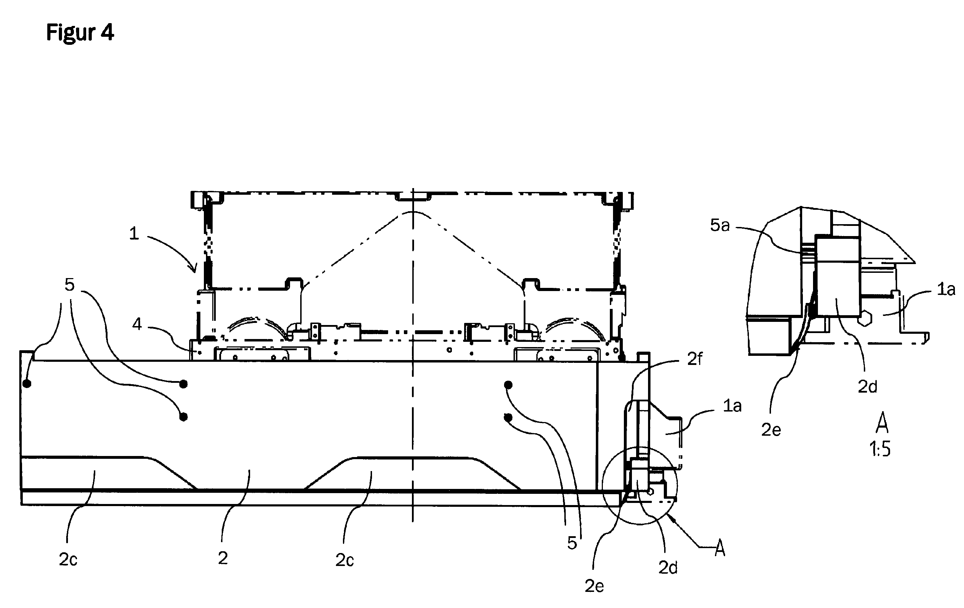

Fig. 4 zeigt eine weitere Seitenansicht, und zwar des Einzelelementes 2a gemäß Fig. 1, das an einem Kopfende des Maschinenbettes 1 mittels der Verbindungsmittel 5 befestigt ist. Der Abschnitt des Formelementes 2, der mit "A" gekennzeichnet ist, ist ferner in Fig. 4 in einer vergrößerten Teilansicht "A" gezeigt. Die Teilansicht zeigt die Befestigung des Formelementes 2 mittels eines Bolzen 5a, sowie die Anordnung des Maschinenbettfußes 1a in der Aussparung 2f. Weiterhin ist ein unterer Abschnitt 2d des Formelementes 2 gezeigt, an dem die Gummilippe 2e angeordnet ist. Wie dargestellt ist und besonders der Teilansicht "A" zu entnehmen ist, ist die Gummilippe 2e flächig zum Beispiel mit einer Klebeverbindung mit dem Abschnitt 2d des Formelementes 2 verbunden.

Abschließend ist zusammenzufassen, dass das Formelement 2, das als Thermoschild eingesetzt wird, insbesondere das Maschinenbett 1 einer Werkzeugmaschine besser vor kurzfristigen Temperaturschwankungen in dem Aufstellbereich der Werkzeugmaschine schützt und somit kurzfristige Verformungen des Maschinenbettes 1, die eine verminderte Fertigungsqualität zur Folge hätten, reduziert bzw. verhindert.

## Patentansprüche

1. Eine numerisch gesteuerte Werkzeugmaschine mit
- einem auf einer ebenen Bodenfläche aufstellbaren Maschinenbett (1),
- einer von dem Maschinenbett (1) gestützten Kabine, und
- einem Formelement (2), das einen unteren Abschnitt des Maschinenbett (1) zumindest zwischen der ebenen Bodenfläche und einer Kabinenwand der Kabine überdeckt,
wobei das Formelement (2) derart an der Werkzeugmaschine befestigt ist, dass ein Hohlraum (3) zwischen dem Maschinenbett (1) und dem Formelement (2) ausgebildet ist,
**gekennzeichnet dadurch, dass**
eine Gummilippe (2e) entlang einer unteren Kante (2d) des Formelements (2) angebracht ist, die dazu geeignet ist, einen Spalt zwischen der unteren Kante (2d) des Formelements (2) und der ebenen Bodenfläche abzudichten.

2. Die Werkzeugmaschine gemäß Anspruch 1, **gekennzeichnet dadurch, dass**
das Formelement (2) sich im Wesentlichen von der ebenen Bodenfläche zu einem oberen Abschnitt des Maschinenbetts (1) erstreckt, derart, dass ein oberer Abschnitt des Formelements (2) zwischen dem Maschinenbett (1) und einem unterem Abschnitt der Kabine angeordnet ist.

3. Die Werkzeugmaschine gemäß Anspruch 2, **gekennzeichnet dadurch, dass** sich der untere Abschnitt der Kabine mit dem Formelement in Kontakt befindet.

4. Die Werkzeugmaschine gemäß einem der voranstehenden Ansprüche, **gekennzeichnet dadurch, dass**
das Formelement (2) den unteren Abschnitt des Maschinenbetts (1) zumindest entlang einer Vorderseite des Maschinenbetts (1) überdeckt.

5. Die Werkzeugmaschine gemäß einem der voranstehenden Ansprüche, **gekennzeichnet dadurch, dass**
das Formelement (2) den unteren Abschnitt des Maschinenbetts (1) entlang zwei oder mehr Seiten des Maschinenbetts (1) überdeckt.

6. Die Werkzeugmaschine gemäß einem der voranstehenden Ansprüche, **gekennzeichnet dadurch, dass**
das Formelement (2) den unteren Abschnitt des Maschinenbetts (1) den vollen Umfang des Maschinenbetts (1) umschließend überdeckt.

7. Die Werkzeugmaschine gemäß einem der voranstehenden Ansprüche, **gekennzeichnet dadurch, dass**
das Formelement (2) aus Metall und/oder einem Kunststoff geformt ist.

8. Die Werkzeugmaschine gemäß einem der voranstehenden Ansprüche, **gekennzeichnet dadurch, dass**
das Formelement (2) ein oder mehrere stranggepresste Formbleche (2a, 2b) umfasst, die an eine äußere Form des Maschinenbetts (1) angepasst sind.

9. Die Werkzeugmaschine gemäß einem der voranstehenden Ansprüche, **gekennzeichnet dadurch, dass**
das Formelement (2) eine Oberflächenbeschichtung aus einem Beschichtungsmaterial aufweist, das eine Wärmeleitfähigkeit aufweist, die unter der Wärmeleitfähigkeit des Materials des Formelements (2) liegt.

10. Die Werkzeugmaschine gemäß Anspruch 9, **gekennzeichnet dadurch, dass**
die Oberflächenbeschichtung auf einer dem Hohlraum (3) zugewandten Oberfläche des Formelements (2) vorgesehen ist.

11. Die Werkzeugmaschine gemäß einem der voranstehenden Ansprüche, **gekennzeichnet dadurch, dass**
das Formelement (2) mittels einer Vielzahl von Befestigungselementen (5a), insbesondere mittels Bolzen (5a), an dem Maschinenbett (1) befestigt ist, wobei die Befestigungselemente (5a) sich von dem Formelement (2) durch den Hohlraum (3) zu dem Maschinenbett (1) erstrecken.

12. Die Werkzeugmaschine gemäß Anspruch 11, **gekennzeichnet dadurch, dass**
die Befestigungselemente (5a) aus einem Material gebildet sind, das eine Wärmeleitfähigkeit aufweist, die unter der Wärmeleitfähigkeit des Materials des Formelements (2) liegt.

13. Die Werkzeugmaschine gemäß einem der voranstehenden Ansprüche,
**gekennzeichnet dadurch, dass**
das Formelement (2) vertiefte Abschnitte (2c) aufweist, so dass der Abstand des Formelements (2) zu dem Maschinenbett (1) variiert, wobei die vertieften Abschnitte (2c) an einer unteren Kante des Formelements (2) ausgebildet sind.

14. Die Werkzeugmaschine gemäß einem der voranstehenden Ansprüche,
**gekennzeichnet dadurch, dass**
das Maschinenbett (1) sich horizontal nach außen erstreckende Maschinenbettfüße (1a) zur Aufstellung auf der ebenen Bodenfläche aufweist, wobei das Formelement (2) Aussparungen (2f) aufweist, durch die sich die Maschinenbettfüße (1a) erstrecken.

## Claims

1. A numerically controlled machine tool including
- a machine bed (1) capable of being installed on a flat ground surface,
- a cabin supported by the machine bed (1), and
- a form element (2) covering a lower section of the machine bed (1) at least between the flat ground surface and a cabin wall of the cabin,
- wherein the form element (2) is fixed to the machine tool such that a cavity (3) is formed between the machine bed (1) and the form element (2),
**characterized in that**
a rubber lip (2e) is attached along a lower edge (2d) of the form element (2), which is suitable to seal a gap between the lower edge (2d) of the form element (2) and the flat ground surface.

2. The machine tool according to claim 1, **characterized in that**
the form element (2) extends substantially from the flat ground surface to an upper section of the machine bed (1) such that an upper section of the form element (2) is disposed between the machine bed (1) and a lower section of the cabin.

3. The machine tool according to claim 2, **characterized in that**
the lower section of the cabin is in contact with the form element.

4. The machine tool according to any one of the preceding claims, **characterized in that**
the form element (2) covers the lower section of the machine bed (1) at least along a front side of the machine bed (1).

5. The machine tool according to any one of the preceding claims,
**characterized in that**
the form element (2) covers the lower section of the machine bed (1) along two or more sides of the machine bed (1).

6. The machine tool according to any one of the preceding claims,
**characterized in that**
the form element (2) covers the lower section of the machine bed (1) enclosing the entire circumference of the machine bed (1).

7. The machine tool according to any one of the preceding claims,
**characterized in that**
the form element (2) is formed of metal and/or a plastic.

8. The machine tool according to any one of the preceding claims,
**characterized in that**
the form element (2) includes one or more extruded profiled sheets (2a, 2b), which are adapted to an exterior shape of the machine bed (1).

9. The machine tool according to any one of the preceding claims,
**characterized in that**
the form element (2) has a surface coating of a coating material, which has thermal conductivity, which is below the thermal conductivity of the material of the form element (2).

10. The machine tool according to claim 9, **characterized in that**
the surface coating is provided on a surface of the form element (2) facing the cavity (3).

11. The machine tool according to any one of the preceding claims,
**characterized in that**
the form element (2) is fixed to the machine bed (1) by means of a plurality of fixing elements (5a), in particular by means of bolts (5a), wherein the fixing elements (5a) extend from the form element (2) through the cavity (3) to the machine bed (1).

12. The machine tool according to claim 11, **characterized in that**
the fixing elements (5a) are formed of a material, which has thermal conductivity, which is below the thermal conductivity of the material of the form element (2).

13. The machine tool according to any one of the preceding claims,
**characterized in that**
the form element (2) has recessed sections (2c) such that the distance of the form element (2) to the machine bed (1) varies, wherein the recessed sections (2c) are formed at a lower edge of the form element (2).

14. The machine tool according to any one of the preceding claims,
**characterized in that**
the machine bed (1) has machine bed feet (1a) extending horizontally outwards for installing on the flat ground surface, wherein the form element (2) has recesses (2f), through which the machine bed feet (1a) extend.

## Revendications

1. Machine-outil à commande numérique, comportant
- un banc de machine (1) susceptible d'être dressé sur une surface de sol plane,
- une cabine soutenue par le banc de machine (1), et
- un élément de forme (2) qui recouvre une portion inférieure du banc de machine (1) au moins entre la surface de sol plane et une paroi de la cabine,
l'élément de forme (2) étant fixé sur la machine-outil de telle sorte qu'un creux (3) est formé entre le banc de machine (1) et l'élément de forme,
**caractérisée en ce que**
une lèvre en caoutchouc (2e) est montée le long d'une arête inférieure (2d) de l'élément de forme (2), qui convient pour étancher un intervalle entre l'arête inférieure (2d) de l'élément de forme (2) et une surface de sol plane.

2. Machine-outil selon la revendication 1, **caractérisée en ce que**
l'élément de forme (2) s'étend sensiblement depuis la surface de sol plane jusqu'à une portion supérieure du banc de machine (1) de telle sorte qu'une portion supérieure de l'élément de forme (2) est agencée entre le banc de machine (1) et une portion inférieure de la cabine.

3. Machine-outil selon la revendication 2, **caractérisée en ce que**
la portion inférieure de la cabine est en contact avec l'élément de forme.

4. Machine-outil selon l'une des revendications précédentes, **caractérisée en ce que**
l'élément de forme (2) recouvre la portion inférieure du banc de machine (1) au moins le long d'une face avant du banc de machine (1).

5. Machine-outil selon l'une des revendications précédentes, **caractérisée en ce que**
l'élément de forme (2) recouvre la portion inférieure du banc de machine (1) le long de deux ou plusieurs faces du banc de machine (1).

6. Machine-outil selon l'une des revendications précédentes, **caractérisée en ce que**
l'élément de forme (2) recouvre la portion inférieure du banc de machine (1) en entourant la totalité du pourtour du banc de machine (1).

7. Machine-outil selon l'une des revendications précédentes, **caractérisée en ce que**
l'élément de forme (2) est formé en métal et/ou en une matière plastique.

8. Machine-outil selon l'une des revendications précédentes, **caractérisée en ce que**
l'élément de forme (2) comprend une ou plusieurs tôles de forme (2a, 2b) extrudées qui sont adaptées à une forme extérieure du banc de machine (1).

9. Machine-outil selon l'une des revendications précédentes, **caractérisée en ce que**
l'élément de forme (2) comprend un revêtement de surface en un matériau de revêtement qui présente une conductivité thermique inférieure à la conductivité thermique du matériau de l'élément de forme (2).

10. Machine-outil selon la revendication 9, **caractérisée en ce que**
le revêtement de surface est prévu sur une surface de l'élément de forme (2) tournée vers le creux (3).

11. Machine-outil selon l'une des revendications précédentes, **caractérisée en ce que**
l'élément de forme (2) est fixé sur le banc de machine (1) au moyen d'une multitude d'éléments de fixation (5a), en particulier au moyen de boulons (5a), les éléments de fixation (5a) s'étendant depuis l'élément de forme (2) jusqu'au banc de machine (1) à travers le creux (3).

12. Machine-outil selon la revendication 11, **caractérisée en ce que**
les éléments de fixation (5a) sont réalisés en un matériau qui présente une conductivité thermique inférieure à la conductivité thermique du matériau de l'élément de forme (2).

13. Machine-outil selon l'une des revendications précédentes, **caractérisée en ce que**
l'élément de forme (2) comprend des portions renfoncées (2c) de telle sorte que la distance de l'élément de forme (2) par rapport au banc de machine (1) varie, les portions renfoncées (2c) étant réalisées sur une arête inférieure de l'élément de forme (2).

14. Machine-outil selon l'une des revendications précédentes, **caractérisée en ce que**
le banc de machine (1) présente des pieds (1a) destinés à se dresser sur la surface de sol plane et s'étendant horizontalement vers l'extérieur, l'élément de forme (2) présentant des échancrures (2f) à travers lesquelles s'étendent les pieds (1a) du banc de machine.
